(19) Europäisches Patentamt / European Patent Office / Office européen des brevets

(11) **EP 1 967 495 B1**

(12) **EUROPEAN PATENT SPECIFICATION**

(45) Date of publication and mention
of the grant of the patent:
**01.08.2012 Bulletin 2012/31**

(51) Int Cl.:
*C01G 19/00* (2006.01)     *C01G 19/02* (2006.01)
*C01G 30/00* (2006.01)     *C09C 1/00* (2006.01)

(21) Application number: **08101808.7**

(22) Date of filing: **20.02.2008**

(54) **Manufacturing method for antimony-containing tin oxide fine particles for forming solar radiation shielding body, dispersion for forming solar radiation shielding body, solar radiation sheilding body, and solar radiation shielding base material**

Herstellungsverfahren für antimonhaltige Zinnoxidfeinteilchen zur Bildung eines Elements zur Abschirmung vor Sonnenstrahlung, Dispersion zur Bildung eines Elements zur Abschirmung vor Sonnenstrahlung, Element zur Abschirmung vor Sonnenstrahlung und Basismaterial zur Abschirmung vor Sonnenstrahlung

Procédé de fabrication de fines particules d'oxyde d'étain contenant de l'antimoine pour former un corps de protection contre les rayonnements solaires, dispersion pour former un corps de protection contre le rayonnement solaire, corps de protection contre le rayonnement solaire, et matériau de base de protection contre le rayonnement solaire

(84) Designated Contracting States:
**GB**

(30) Priority: **21.02.2007 JP 2007040734**
**26.12.2007 JP 2007334969**

(43) Date of publication of application:
**10.09.2008 Bulletin 2008/37**

(73) Proprietor: **Sumitomo Metal Mining Co., Ltd.**
**Tokyo, 105-8716 (JP)**

(72) Inventor: **Chonan, Takeshi**
**c/o Ichikawa Resrch Lab.of Sumitomo Metal Mining**
**Ichikawa-shi Chiba 272-0835 (JP)**

(74) Representative: **Waddington, Richard**
**Appleyard Lees**
**15 Clare Road**
**Halifax HX1 2HY (GB)**

(56) References cited:
**JP-A- 2005 104 801     US-A1- 2005 163 999**

• **DAE-WOOK KIM ET.AL.: "Preparation of hard agglomerates free and weakly agglomerated antimony doped tin oxide (ATO) nanoparticles by coprecipitation reaction in methanol reaction medium" MATERIALS CHEMISTRY AND PHYSICS, vol. 97, 2006, pages 452-457, XP002482318**

## Description

BACKGROUND OF THE INVENTION

1. Field of the Invention

The present invention relates to a solar radiation-shielding body applied to window materials for vehicles, buildings, offices, and general residences; solid glass for use in telephone booths, show windows, illumination lamps, transparent cases, etc.; laminated glasses; plastics; fibers; etc.; a base material for solar radiation-shielding in which the solar radiation-shielding body is formed on a transparent substrate; a dispersion for forming the solar radiation-shielding body; and antimony-containing tin oxide fine particles for forming the solar radiation-shielding body contained in the dispersion for forming the solar radiation-shielding body.

2. Description of the Related Art

Conventionally, as a method for removing and reducing a thermal ingredient from light of an external light source such as solar radiation, an electric bulb, or the like, a film containing a material for reflecting an infrared ray which greatly contributes to a thermal effect is formed as a heat wave reflecting transparent substrate on a surface of a transparent substrate such as glass or the like, and the heat wave reflecting transparent substrate is used. A metal oxide such as $FeOx$, $CoOx$, $CrOx$, and $TiOx$, or a metallic material containing a large number of free electrons such as Ag, Au, Cu, Ni, and Al is used as the aforementioned material.

However, the metal oxides and the metallic materials have such properties to reflect and absorb not only the infrared ray which greatly contributes to the thermal effect but also a visual light at the same time, and therefore, there is a problem of lowering a visible light transmittance. However, the transparent substrate such as glass or the like used for a window material such as a building, a vehicle, a telephone booth, or the like requires a high transmittance in a visible light region. Thus, when the metal oxide or the metallic material is used for the transparent substrate for a building, a vehicle, etc., the film thickness thereof needs to be extremely thin.

Accordingly, when the metal oxide or the metallic material is formed on the transparent substrate, generally, a film having a thickness of as thin as approximately 10 nm is formed by physical film-formation methods such as spray baking, a CVD method, a sputtering method, a vacuum deposition method, and the like.

However, those physical film formation-methods require a huge apparatus or a vacuum equipment, and there is a problem of productivity or area enlargement, and a disadvantage of high film formation cost. Further, when it is attempted to increase sun radiation shielding properties (properties for shielding a light having a wavelength of 300 to 2,100 nm) of the metal oxide or the metallic material, reflectivity of the visual light region tends to be high at the same time, resulting in disfigurement caused by a glaring appearance like a mirror.

Further, when an inorganic coating containing the above-mentioned metal oxide, such as $FeOx$ and $CoOx$, and the above-mentioned metallic material, such as, Ag and Au, is formed on the transparent substrate, the conductivity of the inorganic coating becomes high in many cases. When the conductivity of the inorganic coating becomes high, such problems arise that the electric wave of a cellular phone, a television set, a radio, or the like is reflected to be unable to receive and that the electric wave is interfered in a surrounding area.

In contrast, as a method of removing and reducing a thermal ingredient from light of an external light source, there has been used a method using a resin film to which an organic near infrared absorber is added

However, the method using the resin film has a fatal defect in terms of weather resistance such that the organic near infrared absorber is remarkably deteriorated due to heat or humidity as compared with an inorganic near infrared absorber.

Further, such a method has a disadvantage that when it is attempted to increase the visible light transmittance in the resin film, the solar radiation shielding properties decrease. In contrast, when it is attempted to increase the solar radiation shielding properties, the visible light transmittance decreases.

Further, properties such as little haze of the film or the like are required for the solar radiation-shielding body used for, for example, the window material or the like in addition to the aforementioned optical properties and electrical properties. The haze of the film is evaluated by a numerical value referred to as a haze value. The haze value is defined as a ratio of a diffuse transmission light to a total transmittance, and a film looks hazy to human eyes when the value is high. Accordingly, the window material or the like requiring for transparency is desired to have the low haze value of less than 1%.

Therefore, as an inorganic material other than a metal oxide and a metallic material having a high visible light transmittance and a solar radiation shielding function, antimony-containing tin oxide (ATO) is known. The antimony-containing tin oxide has a relatively low visible light reflectance and does not make the appearance of the transparent substrate glare.

For example, Japanese Patent Application Laid-open No. 7-257922 proposes obtaining a heat ray shielding glass by applying, to a glass, a heat ray shielding coating liquid obtained by dispersing antimony-containing tin oxide fine particles in a silazane polymer solution, and calcinating the resultant.

In contrast, the inventors of the present invention propose, in Japanese Patent Application Laid-open No. 2002-194291, a coating liquid for forming a solar radiation shielding film containing hexaboride fine particles and indium tin oxide fine particles or antimony tin oxide fine particles so as to increase reflection and absorption effects in the near infrared region near a visible light region.

Further, the inventors of the present invention propose, in Japanese Patent Application Laid-open No. 2003-176132, solar radiation shielding antimony tin oxide particles capable of forming a solar radiation shielding film having such optical properties as a high visible light transmittance, a low solar radiation transmittance, and simultaneously a low haze value.

Further, the inventors of the present invention propose, in Japanese Patent Application Laid-open No. 2004-75510, a manufacturing method for a solar radiation-shielding body having a high visible light transmittance, a low solar radiation transmittance, and a low haze value.

Further, the inventors of the present invention propose, in Japanese Patent Application Laid-open No. 2004-83397, physical properties of ATO fine particles capable of exhibiting optical properties including high visible light transmittance, low solar radiation transmittance, and low haze value when the particles are formed on or in a transparent substrate. Then, the inventors of the present invention propose antimony tin oxide fine particles having such physical properties; a dispersion for forming a solar radiation-shielding body which contains the antimony tin oxide fine particles and with which a solar radiation-shielding body can be formed by a simple application method or a kneading method; and a solar radiation-shielding body containing the antimony tin oxide fine particles having such physical properties.

## SUMMARY OF THE INVENTION

However, according to the investigation of the inventors of the present invention, when a dispersion of a solar radiation-shielding body for forming a solar radiation-shielding body is manufactured using an antimony tin oxide relating to those prior art techniques, it takes long time to pulverize the antimony tin oxide. This is because the antimony tin oxide is in a form of a cluster-like strongly agglomerated material. Further, even after the prolonged pulverization, the strongly agglomerated material is partially mixed in the pulverized material. Therefore, after the dispersion of solar radiation-shielding body is manufactured, the strongly agglomerated material partially mixed causes sedimentation, which leads to a problem in that a stable dispersion of the solar radiation-shielding body cannot be obtained.

The present invention has been made under the above-mentioned circumstances. It is therefore an object of the present invention to provide a manufacturing method for antimony-containing tin oxide fine particles having excellent dispersibility and solar radiation shielding properties, and further to provide a dispersion for forming a solar radiation-shielding body using the antimony-containing tin oxide fine particles manufactured by the manufacturing method; a solar radiation-shielding body, and a base material for solar radiation-shielding.

In order to achieve the above-mentioned object, the inventors of the present invention studied the requirements for which the antimony-containing tin oxide fine particles having excellent dispersibility and solar radiation shielding properties need to satisfy. As a result, the inventors of the present invention found that, by subjecting a filtered washed material of a hydroxide containing tin and antimony to wet treatment with an alcohol solution; drying the resultant to thereby form a precursor of antimony-containing tin oxide fine particles; and then calcinating the precursor in the manufacturing method for antimony-containing tin oxide fine particles, the tap density becomes equivalent or lower than a specific value and the antimony tin oxide fine particles are smoothly pulverized and dispersed using a medium stirring mill with respect to the physical properties of the antimony-containing tin oxide fine particles after calcination. Then, the inventors of the present invention reach that antimony-containing tin oxide fine particles having excellent dispersibility and solar radiation shielding properties can be obtained when the antimony-containing tin oxide fine particles are smoothly pulverized and dispersed, and thus the present invention has been accomplished.

That is, a first means to solve the above-mentioned problems relates to a manufacturing method for antimony-containing tin oxide fine particles for solar radiation-shielding,

the antimony-containing tin oxide fine particles having: a tap density of 1.85 g/cm$^3$ or lower; a color of powders L* of 40 to 65, a color of powders a* of -5 to -1, and a color of powders b* of -11 to -1 in an L*a*b* color system; and a specific surface area in a range of 5 to 110 m$^2$/g, including:

parallel-dropping an alcohol solution in which an antimony compound is dissolved and an alkali solution to a tin compound solution having a temperature of 50°C or lower to generate a hydroxide containing tin and antimony, to thereby obtain a precipitate;

subjecting the precipitate to decantation until a conductivity of a washing liquid reaches 1 mS/cm or lower, to thereby obtain a filtered washed material;

subjecting the washed material to wet treatment with an alcohol solution and drying thereafter, to thereby obtain a precursor of antimony-containing tin oxide fine particles; and

calcinating the precursor, to thereby obtain the antimony-containing tin oxide fine particles for solar radiation-shielding.

A second means relates to a manufacturing method for antimony-containing tin oxide fine particles for solar radiation-shielding,

the antimony-containing tin oxide fine particles having: a tap density of 1.85 g/cm$^3$ or lower; a color of powders L* of 40 to 65, a color of powders a* of -5 to -1, and a color of powders b* of -11 to -1 in an L*a*b* color system; and a specific surface area in a range of 5 to 110 m$^2$/g, in-

cluding:

parallel-dropping a tin compound solution and an alcohol solution in which an antimony compound is dissolved to and an alkali solution having a temperature of 50°C or lower to generate a hydroxide containing tin and antimony, to thereby obtain a precipitate;

subjecting the precipitate to decantation until a conductivity of a washing liquid reaches 1 mS/cm or lower, to thereby obtain a filtered washed material;

subjecting the washed material to wet treatment with an alcohol solution and drying thereafter, to thereby obtain a precursor of antimony-containing tin oxide fine particles; and

calcinating the precursor, to thereby obtain the antimony-containing tin oxide fine particles for solar radiation-shielding.

A third means relates to the manufacturing method for antimony-containing tin oxide fine particles for solar radiation-shielding according to the first or second means, further including:

immersing the precursor of antimony-containing tin oxide fine particles in an alcohol solution containing one or more elements selected from Si, Al, Zr, and Ti in a ratio of less than 15 wt% in terms of oxide and drying thereafter, to thereby obtain a precursor of antimony-containing tin oxide fine particles containing the one or more elements selected from Si, Al, Zr, and Ti.

A fourth means relates to the manufacturing method for antimony-containing tin oxide fine particles for solar radiation-shielding according to any one of the first to third means, in which the alcohol solution used contains the alcohol in a ratio of 50 wt% or more.

A fifth means relates to the manufacturing method for antimony-containing tin oxide fine particles for solar radiation-shielding according to any one of the first to third means, in which the precursor of antimony-containing tin oxide fine particles is calcined at a temperature of 500°C or higher and lower than 1,100°C.

A six means relates to the manufacturing method for antimony-containing tin oxide fine particles for solar radiation-shielding according to the first means, in which the parallel-dropping of the alcohol solution in which an antimony compound is dissolved and the alkali solution is performed for 0.5 minutes or more and 30 or less minutes.

A seventh means relates to the manufacturing method for antimony-containing tin oxide fine particles for solar radiation-shielding according to the second means, in which the parallel-dropping of the tin compound solution and the alcohol solution in which of an antimony compound is dissolved is performed for 0.5 minutes or more and 30 or less minutes.

An eighth means relates to the manufacturing method for antimony-containing tin oxide fine particles for solar radiation-shielding according to any one of the first to seventh means, in which surfaces of the antimony-containing tin oxide fine particles for solar radiation-shielding are coated with a compound containing at least one element selected from Si, Ti, Al, Zr, and Y.

A ninth means relates to a dispersion for forming a solar radiation-shielding body, including antimony-containing tin oxide fine particles for solar radiation-shielding manufactured by the manufacturing method according to any one of the first to eighth means and a solvent being mixed together, in which each of the antimony-containing tin oxide fine particles for solar radiation-shielding in the solvent, which is obtained by pulverizing and dispersing the mixture using a medium stirring mill, has a diameter of 130 nm or smaller.

A tenth means relates to the dispersion for forming a solar radiation-shielding body according to the ninth means, further including one or more binders selected from inorganic binders and resin binders.

An eleventh means relates to a solar radiation-shielding body, including the antimony-containing tin oxide fine particles for solar radiation-shielding manufactured by the manufacturing method according to any one of the first to eighth means.

A twelfth means relates to a solar radiation-shielding body, which is formed using the dispersion for forming a solar radiation-shielding body according to the ninth or tenth means.

A thirteenth means relates to the solar radiation-shielding body, including the solar radiation-shielding body according to the eleventh or twelfth means formed on one of a glass and a plastic.

A fourteenth means relates to a solar radiation-shielding body, including one of the antimony-containing tin oxide fine particles for solar radiation-shielding manufactured by the manufacturing method according to any one of the first to eighth means and the dispersion for forming a solar radiation-shielding body according to the ninth or tenth means,

each of which being kneaded into a resin used as a base material, the resin being molded into one of a plate-like shape, a sheet-like shape, and a film-like shape to form the solar radiation-shielding body.

A fifteenth means relates to the solar radiation-shielding body according to any one of claims the eleventh to fourteenth means, in which the solar radiation-shielding body has a transmittance of light having a wavelength of 300 to 2,100 nm of less than 65% and a haze value of the solar radiation-shielding body of less than 1%, when a visible light transmittance of the solar radiation-shielding body is 60% or more and 80% or less.

A sixteenth means relates to a base material for solar radiation-shielding, including the solar radiation-shielding body according to any one of the eleventh to fifteenth means, which is formed on a transparent substrate.

According to the manufacturing method for antimony-containing tin oxide fine particles for solar radiation-shielding of the present invention, antimony-containing tin oxide fine particles for solar radiation-shielding can be easily obtained in which the tap density is 1.85 g/cm$^3$ or lower; the color of powders L* is 40 to 65, the color of powders a* is -5 to -1, and the color of powders b* is -11 to -1 in the L*a*b* color system; and the specific surface area is in the range of 5 to 110 m$^2$/g. The antimony tin oxide fine particles are smoothly pulverized and dispersed using a medium stirring mill, and thus, a dispersion for forming a solar radiation-shielding body which contains the antimony-containing tin oxide fine particles for solar radiation-shielding and has an excellent dispersibility can be manufactured with a high productivity. Further, by the application of an application method, a kneading method, etc., to the dispersion for forming a solar radiation-shielding body, a solar radiation-shielding body and a base material for solar radiation-shielding can be obtained which have a high light transmittance in a visible light region while having excellent light shielding properties in an infrared region or a near infrared region.

BRIEF DESCRIPTION OF THE DRAWINGS

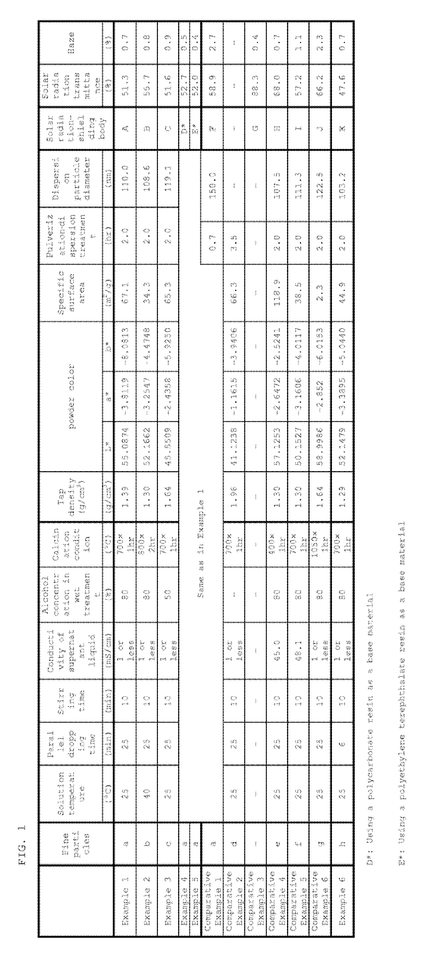

FIG. 1 is a list of antimony tin oxide fine particles and solar radiation-shielding bodies according to Examples and Comparative Examples.

DETAILED DESCRIPTION OF THE PREFERRED EMBODIMENTS

Hereinafter, with respect to an embodiment of the invention, description will be made in detail in the following order, 1. antimony-containing tin oxide fine particles, 2. manufacturing method for antimony-containing tin oxide fine particles, 3. dispersion for forming a solar radiation-shielding body, and 4. solar radiation-shielding body.

1. Antimony-containing Tin Oxide Particles

Solar radiation shielding fine particles for use in a dispersion for forming a solar radiation-shielding body of the present invention are antimony-containing tin oxide particles whose tap density is 1.85 g/cm$^3$ or less. Further, with respect to the color of powders of the fine particles, L* is 40 to 65, a* is -5 to -1, and b* is -11 to -1 in terms of color of powders evaluated by the L*a*b* color system recommended by the International Commission on Illumination (CIE). Further, the specific surface area is in the range of 5 to 110 m$^2$/g. Moreover, it is preferred for the antimony-containing tin oxide fine particles of the present invention to have a crystallite diameter of 4 to 125 nm, preferably 5 to 80 nm, and more preferably 6 to 60 nm. A solar radiation-shielding body, which is formed using a dispersion whose dispersion particle diameter when the antimony-containing tin oxide fine particles are dispersed in a solvent is adjusted to 130 nm or lower, exhibits desired solar radiation shielding properties. With respect to influences of the crystallite diameter of the antimony-containing tin oxide fine particles on a solar radiation shielding function, as the specific surface area becomes larger, the crystallite diameter becomes smaller in the antimony-containing tin oxide fine particles of the present invention, i.e., there is a negative relationship between the specific surface area and the crystallite diameter. The details are unknown, however, it has been inferred that the crystallite diameter has an influence on the solar radiation shielding function similarly as the specific surface area, and the crystallite diameter has an optimal range relative to the solar radiation shielding function.

Although the details will be described later, due to that the tap density of the antimony-containing tin oxide fine particles for solar radiation-shielding of the present invention is equivalent to or lower than the above-mentioned prescribed value, the antimony-containing tin oxide fine particles are smoothly pulverized and dispersed using a medium stirring mill. As a result, when the antimony tin oxide fine particles are dispersed in a solvent to thereby produce a dispersion for forming a solar radiation-shielding body, the antimony tin oxide fine particles are stably dispersed, and the dispersion particle diameter becomes 130 nm or lower. The dispersion for forming a solar radiation-shielding body is excellent in dispersibility. Further, by the application of an application method, a kneading method, etc., to the dispersion for forming a solar radiation-shielding body, a solar radiation-shielding body and a base material for solar radiation-shielding can be obtained which have a high light transmittance in a visible light region while having excellent light shielding properties in an infrared region or a near infrared region.

2. Method of producing antimony-containing tin oxide particles

Hereinafter, description is made of a manufacturing method for solar radiation shielding antimony-containing tin oxide particles of the present invention.

First, an alcohol solution in which an antimony compound is dissolved and an alkali solution are parallel-dropped to a solution of a tin compound whose liquid temperature is adjusted to 50°C or lower. Alternately, a solution of a tin compound and an alcohol solution in which an antimony compound is dissolved are parallel-dropped to an alkali solution whose liquid temperature is 50°C or lower. Then, by either one of the parallel-dropping processes, a hydroxide which is a fine particle precursor containing tin and antimony is formed and precipitated. It should be noted that HCl may be added beforehand to a solution of the tin compound.

When the solution temperature is 50°C or lower, the concentration(s) of the tin compound and/or the antimony compound in the system do/does not change due to the evaporation of water as a solvent and the like. Therefore, the reproducibility of a particle diameter of the fine particle precursor can be achieved. Further, when the solution temperature is 50°C or lower, the growth of the fine particle precursor is inhibited, whereby desired optical properties can be obtained. On the other hand, the lower limit of the solution temperature is not limited. However, in order to achieve a solution temperature lower than room temperature, a cooling device and the like are additionally required, which incurs a device cost and a production cost. Thus, it is preferred to adjust the solution temperature to a temperature which can be achieved by not using such a device.

In view of desired optical properties, it is preferred that the addition amount of the antimony compound to the tin compound solution be preferably 1 to 20 wt%, and more preferably 3 to 15 wt% to the tin oxide in terms of element. The tin compound and the antimony compound to be used are not limited, and, for example, tin chloride, tin nitrate, tin sulfate, antimony chloride, and antimony bromide are mentioned.

Mentioned as the alkali solution used as a precipitant are various aqueous solutions, such as ammonium hydrogencarbonate, ammonia water, sodium hydroxide, and potassium hydroxide. Of those, ammonium hydrogencarbonate and ammonia water are particularly preferred. The alkali concentration of the alkali solution may be equivalent to or higher than a chemical equivalent required for the tin compound and the antimony compound to from a hydroxide. It is more preferred that the alkali concentration of the alkali solution be equivalent to a chemical equivalent or three times as high as the chemical equivalent.

The parallel-dropping time of the alcohol solution and the alkali solution or the parallel-dropping time of the tin compound and the alcohol solution are 0.5 minutes or more and less than 60 minutes, preferably 30 minutes in view of the particle diameter and the productivity of the precipitated hydroxide. In order to make the inside of the system uniform also after the dropping is complete, the aqueous solution is continuously stirred. The temperature of the aqueous solution at that time is the same as the temperature during the parallel-dropping, and 50 deg.C or lower. The duration of stirring is not limited, and may be 0.5 minutes or more and 30 or less minutes, preferably 15 minutes in view of the productivity.

Next, the precipitate is repeatedly subjected to decantation. Then, the resultant is thoroughly cleaned until the conductivity of the supernatant liquid of the washing liquid in the decantation reaches 1 mS/cm or lower, and then filtered. When impurities, such as chlorine ion and sulfate ion, which remain in the precipitate, exceed 1.5 wt%, the solution of antimony to tin oxide is impeded in a calcination process, and thus desired optical properties are not demonstrated. Therefore, the precipitate is thoroughly cleaned and filtered until the conductivity of the supernatant liquid of the washing liquid in the decantation reaches 1 mS/cm or lower. When the conductivity of the supernatant liquid is 1mS/cm or lower, the amount of the impurities remaining in the precipitate can be adjusted to 1.5 wt% or lower.

Next, the cleaned precipitate is subjected to wet treatment with an alcohol solution to form a wet-treated material. Then, the wet-treated material is dried. Here, it is also preferred to use, as the alcohol solution for use in the wet treatment, an alcohol solution containing one kind or more elements selected from Si, Al, Zr, and Ti in a ratio of 15 wt% or lower in terms of oxide. Employment of such construction allows an oxide of the one kind or more elements selected from Si, Al, Zr, and Ti to independently exist in the vicinity of the antimony-containing tin oxide, thereby suppressing the particle growth of the antimony-containing tin oxide during calcination. When the content of the element is less than 15 wt% in terms of oxide, the content ratio of the antimony-containing tin oxide is secured, thereby preventing the reduction in the solar radiation shielding properties.

Then, the obtained precursor is calcined, to thereby obtain the antimony-containing tin oxide fine particles of the present invention. In this case, the concentration of the above-mentioned alcohol solution at this time is preferably 50% or higher. This is because when the concentration of the alcohol solution is 50% or higher, the antimony-containing tin oxide fine particles can be prevented from forming a cluster-like strongly agglomerated material.

There is no limitation on alcohol for use in the alcohol solution, and alcohol having excellent solubility in water and a boiling point of 100°C or lower is preferred. For example, methanol, ethanol, propanol, and tert-butyl alcohol are mentioned.

The wet treatment is performed by putting the precipitate, which has been subjected to filtered and cleaned, in an alcohol solution, and stirring the mixture. The stirring time and the stirring rate may be suitably determined according to the amount of a material to be treated. The amount of the alcohol solution at the time of putting the precipitate in an alcohol solution may be determined in such a manner that the flowability can be secured at which the precipitate can be readily stirred. The stirring time and the stirring rate are suitably determined with the proviso that the precipitate containing a part which has been agglomerated at the time of filtration and cleaning is uniformly mixed in an alcohol solution until the agglomerated part disappears.

Further, the wet treatment may be performed usually at room temperature. It is a matter of course that the wet treatment can be carried out while, as required, warming to such an extent that an alcohol is not lost by evaporation. It is preferred to perform the wet treatment by heating at a temperature equal to or lower than the boiling point of an alcohol. Thus, it can be prevented that an alcohol is lost by evaporation during the wet treatment, and the effect of the wet treatment is lost. When the wet-treated material is dried after an alcohol is lost by evaporation during wet treatment and the effect of the wet treatment is lost, a strongly agglomerated material is formed, which is not preferred.

After the wet treatment is performed, the wet-treated material is heated and dried while being wet with an alcohol. The drying temperature and the drying time of the wet-treated material are not limited. If the wet treatment has already been performed, a strongly agglomerated material is not formed even if the wet-treated material is dried. Therefore, the drying temperature and the drying time may be suitably determined according to conditions, such as the amount of the wet-treated material to be treated and a treatment device. By the drying process, a precursor of the antimony-containing tin oxide which has been subjected to wet treatment was obtained.

Then, the precursor of the antimony-containing tin oxide which has been subjected to wet treatment is heated to 500°C or higher under atmospheric air, and then calcinating the resultant for 30 minutes to 5 hours, thereby manufacturing antimony-containing tin oxide fine particles of the present invention. During the calcination, antimony can be thoroughly dissolved in a tin oxide by heating to 500°C or higher. Thus, such a temperature is preferred. In contrast, by performing the calcination while not exceeding 1,100°C, the particle diameter of the antimony tin oxide fine particles can be avoided from roughly increasing. Thus, a solar radiation-shielding body with high transparency to visible light can be obtained as described later. Thus, such a temperature is preferred. In view of the above respects, it is preferred that the calcination temperature be in the range of not less than 500°C and less than 1,100°C.

By the above-mentioned manufacturing method, antimony-containing tin oxide fine particles for solar radiation-shielding can be obtained in which the tap density is 1.85 g/cm³ or lower; the color of powders L* is 40 to 65, the color of powders a* is -5 to -1, and the color of powders b* is -11 to -1 in the L*a*b* color system; and the specific surface area is in the range of 5 to 110 m²/g. A solar radiation-shielding body and a base material for solar radiation-shielding which are obtained using a dispersion for forming a solar radiation-shielding body containing the antimony-containing tin oxide having the above-mentioned tap density, color of powders, and specific surface area are imparted with desired optical qualities.

The reasons are considered as follows.

(1) Tap density

The precursor of the antimony-containing tin oxide fine particles for solar radiation-shielding is subjected to the above-mentioned wet treatment, thereby forming bulky particles. As a result, when the precursor is calcined, a weakly agglomerated material is formed. Thus, the antimony-containing tin oxide fine particles can be prevented from forming a cluster-like strongly agglomerated material.

The antimony-containing tin oxide fine particles do not form a cluster-like strongly agglomerated material, and thus a bulky weakly agglomerated material is formed. As a result, the tap density of the antimony-containing tin oxide fine particles becomes 1.85 g/cm³ or lower.

Then, when the tap density of the antimony-containing tin oxide fine particles is 1.85 g/cm³ or lower, the fine particles become difficult to precipitate and are likely to disperse in a solvent. Thus, the antimony-containing tin oxide fine particles are smoothly pulverized and dispersed using a medium stirring mill. Therefor, the dispersion for forming a solar radiation-shielding body using the antimony-containing tin oxide fine particles for solar radiation-shielding have excellent dispersibility and can reduce the near-infrared transmittance while maintaining high visible light transmittance.

(2) Color of powders and specific surface area

Description will be given of the general interaction between light and electrons in a substance. It is known that a substance has an intrinsic plasma frequency, and light having a wavelength longer than the frequency is reflected and light having a wavelength shorter than the frequency is permeated. The plasma frequency $\omega_p$ is expressed by Equation (1).

$$\omega_p{}^2 = nq^2/\varepsilon m \qquad\qquad (1)$$

where n represents a conduction electron density, q represents a charge of an electron, $\varepsilon$ represents a dielectric constant, and m represents an effective mass of an electron.

In general, when the conduction electron density increases in a certain substance, a plasma frequency increases. Thus, light having a short wavelength is also reflected. The standard conduction electron density of metal is $10^{22}$/cm³ and the standard conduction electron density of an antimony tin oxide is $10^{20}$/cm³. Thus, metal already shows high reflectivity in a visible light range. However, the antimony tin oxide transmits visible light starts to show high reflectivity from a near infrared region. Therefore, the antimony tin oxide can be used as a solar radiation-shielding body. Further, the color of powders of the antimony tin oxide fine particles slightly changes depending on a doped amount of antimony, a calcination temperature, etc. Then, the pressed powder resistance also changes in accordance with the change in color of the powders. That is, it may be thought that the color of powders of the antimony tin oxide fine particles, the conduction electron density, and the plasma frequency are closely correlated.

Further, the influences of the specific surface area of the antimony-containing tin oxide fine particles on optical properties are considered as described below.

When the particle diameter of the antimony-containing tin oxide fine particles is defined as r and the specific gravity is defined as p, the total shielding area A of a given weight M of the antimony-containing tin oxide fine particles is expressed by Equation (2).

$$A = \pi r^2 \cdot M / \rho / 4\pi r^3 / 3) \qquad (2)$$

Based on Equation (2), the specific surface area becomes larger as the particle diameter becomes smaller. This shows that the total shielding area A becomes larger when the particle diameter r becomes smaller, i.e., the specific surface area is larger. However, when the particle diameter becomes excessively small, the solar radiation shielding function decreases due to the change in electron density of the particles and the like. Therefore, it is inferred that the particle diameter r, i.e., the specific surface area, has an optimal range relative to the solar radiation shielding function.

Therefore, the inventors of the present invention studied in detail the relationship between the color of the powders and the specific surface area of the antimony-containing tin oxide fine particles which are obtained by calcination and the properties of the solar radiation-shielding body containing the antimony-containing tin oxide fine particles, thereby achieving the optimal conditions of the color of the powders and a specific surface area for the solar radiation-shielding body. The examination results reveal that when the color of powders L* is 40 to 65, the color of powders a* is -5 to -1, and the color of powders b* is -11 to -1 in the L*a*b* color system and the specific surface area is in the range of 5 to 110 $m^2/g$ in the antimony-containing oxide tin fine particles, the solar radiation-shielding body exhibits excellent optical properties such that the solar radiation transmittance is less than 65% and the haze value is less than 1% at a wavelength of 300 to 2,100 nm at the time when the visible light transmittance is not less than 60% and less than 80% or lower.

In order to suppress the catalytic action of the antimony-containing tin oxide fine particles, it is also preferred to, as required, coat the surfaces of the fine particles with a compound containing one or more elements selected from Si, Ti, Al, Zr, and Y.

There is no limitation on the method of coating the antimony-containing tin oxide fine particles with the compound. For example, there are a method utilizing the sol gel reaction of metal alkoxide containing the corresponding metal and a method using metal salt, such as chloride, as the compound.

3. Dispersion for forming a solar radiation-shielding body

The dispersion for forming a solar radiation-shielding body of the present invention is obtained by pulverizing and dispersing, using a medium agitation mill, a mixed slurry of the antimony-containing tin oxide fine particles for solar radiation-shielding obtained by the above-mentioned manufacturing method and a solvent. The dispersion state of the fine particles in the solvent is excellent, and the dispersion particle diameter is 130 nm or lower.

When the dispersion particle diameter is 130 nm or lower, light having a wavelength of 380 nm to 780 nm in a visible light region is not scattered by geometrical scattering or Mie scattering. Therefore, the haze value decreases, and the increase in the visible light transmittance can be aimed at. Thus, such a dispersion particle diameter is preferred. Further, in a Rayleigh-scattering region, scattered light deceases in inverse ratio to the 6th power of the particle diameter. Therefore, the scattering decreases and the transparency increases in accordance with the reduction in the dispersion particle diameter. Then, when the dispersion particle diameter becomes 100 nm or less, the scattered light sharply decreases, and thus the transparency further increases. Thus, such a dispersion particle diameter is preferred.

By providing a dispersion for forming a solar radiation-shielding body in which the dispersion particle diameter of the antimony-containing tin oxide fine particles dispersed in the above-mentioned solvent is as small as 130 nm or less and the particles are stably dispersed, a solar radiation-shielding body can be obtained which satisfies requirements that the solar radiation transmittance is less than 65% at a wavelength of 300 to 2,100 nm at the time when the visible light transmittance is not less than 60% and less than 80% and the haze value is less than 1%.

Hereinbelow, description will be briefly given of the dispersion particle diameter of the antimony-containing tin oxide fine particles in the dispersion for forming a solar radiation-shielding body. The dispersion particle diameter of the antimony-containing tin oxide fine particles refers to the particle diameter of a simple substance of the free fine particles of the antimony-containing tin oxide fine particles dispersed in a solvent or the particle diameter of agglomerated particles in which the antimony-containing tin oxide fine particles are agglomerated. The dispersion particle diameter can be measured using various particle size distribution meters. For example, a sample of the dispersion for forming a solar radiation-shielding body is extracted, and then, the sample can be measured for the dispersion particle diameter using ELS-8000 manufactured by Otsuka Electronics Co., Ltd., employing dynamic light scattering as the principle.

In contrast, there is no limitation on the solvent for use in the dispersion for forming a solar radiation-shielding body, and may be suitably determined according to the application conditions and application environment of the dispersion for forming a solar radiation-shielding body; an inorganic binder or a resin binder to be suitably added; etc. For example, various kinds of organic solvents, such as water; alcohols, such as ethanol, propanol, butanol, isopropyl alcohol, isobutyl alcohol and diacetone alcohol; ethers, such as methyl ether, ethyl ether, and propyl ether; esters; ketones, such as acetone, methyl ethyl ketone, diethyl ketone, cyclohexanone, and isobutyl ketone are usable. Further, acid or alkali may be added, as required, for pH adjustment.

Furthermore, in order to further improve the dispersion stability of the antimony-containing tin oxide fine particles in the dispersion for forming a solar radiation-shielding body and to prevent the particles from roughly increasing due to re-agglomeration, various kinds of surfactants, coupling agents, etc., are preferably added. By applying the dispersion for forming a solar radiation-shielding body to a transparent substrate or kneading the same into the substrate, a solar radiation-shielding body having such optical properties as a high visible light transmittance, a low solar radiation transmittance, and simultaneously a low haze value.

The dispersion for forming a solar radiation-shielding body can suitably contain at least one member selected from an inorganic binder and a resin binder. The types of the inorganic binder or the resin binder to be contained in the dispersion for forming a solar radiation-shielding body are not limited. Silicon, zirconium, titanium, or aluminum, or a partially hydrolytic condensation polymer thereof, or organosilazane can be applied as the inorganic binder, and a thermoplastic resin such as an acrylic resin, a thermosetting resin such as an epoxy resin, and the like can be applied as the resin binder

There is no limitation on the method of dispersing the antimony-containing tin oxide fine particles into a dispersion insofar as the fine particles are uniformly dispersed in the dispersion without agglomeration. Mentioned as the dispersion methods are pulverization and dispersion methods using, for example, a device, such as a bead mill, a ball mill, a sand mill, a paint shaker, and an ultrasonic homogenizer. Of those, pulverization and dispersion using a medium stirring mill is preferred because it does not take a long time for obtaining a desired dispersion particle diameter. By the pulverization and dispersion treatment using such a device, the antimony-containing tin oxide fine particles can be finely pulverized due to, for example, collision of the fine particles simultaneously with the dispersion of the antimony-containing tin oxide fine particles into the dispersion, whereby the antimony-containing tin oxide fine particles can be dispersed while being further finely pulverized (i.e., pulverized and dispersed).

Further, in order to improve the solar radiation shielding properties of the solar radiation-shielding body of the present invention, it is preferred to suitably add, as required, to the dispersion of the present invention, boride particles represented by Formula $XB_m$ (where X represents a metallic element selected from alkaline earth elements or rare earth elements including yttrium, $4 \leq m \leq 6.3$); fine particles of a tungsten oxide represented by Formula: $W_yO_z$ (where, W represents tungsten and O represents oxygen, $2.0 < z/y < 3.0$), and/or fine particles of complex tungsten oxides represented by Formula $M_x$-

$W_yO_z$ (where, M represents at least one element selected from H, He, alkali metals, alkaline earth metals, rare earth elements, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, and Re; W represents tungsten; and O represents oxygen, $0.001 \leq x/y \leq 1$ and $2.0 < z/y \leq 3.0$). Note that, the addition amount of the above substance may be suitably determined in accordance with desired solar radiation shielding properties.

When a coating is formed on a transparent substrate using the prepared dispersion for forming a solar radiation-shielding body, the conductivity of the solar radiation-shielding body is exhibited along an electrically conductive pass via a contact portion of the antimony-containing tin oxide fine particles. Then, by, for example, adjusting the amount of a surfactant or a coupling agent contained in the dispersion for forming a solar radiation-shielding body, the electrically conductive pass can be partially cut. Thus, the conductivity of the solar radiation-shielding body can be controlled to $10^6$ $\Omega/\square$ or higher (read as "ohm per square"). By controlling the surface resistance value to approximately $10^6$ $\Omega/\square$ or higher, reflection of the solar radiation-shielding body to an electric wave can be restrained. As a result, for example, such problems that the electric wave of a cellular phone, a television set, a radio, or the like is reflected to be unable to receive, that the electric wave is interfered, or the like can be avoided in and out of a building where the transparent substrate in which the solar radiation-shielding body is formed is placed.

The solar radiation-shielding body in which the dispersion for forming a solar radiation-shielding body is formed on a transparent substrate has a film structure in which the antimony-containing tin oxide fine particles alone are deposited on the substrate. The film exhibits the solar radiation shielding effect as it is. However, it is preferred to add one or more kinds of members selected from an inorganic binder and a resin binder at the time of dispersing the antimony-containing tin oxide fine particles in the above-mentioned production process of the dispersion for forming a solar radiation-shielding body. By adding the binder to the dispersion for forming a solar radiation-shielding body, the solar radiation-shielding body to be manufactured is imparted with effects that the conductivity can be controlled by adjusting the addition amount of the binder; the adhesiveness to the substrate of the antimony-containing tin oxide fine particles after the antimony-containing tin oxide fine particles are applied and cured is improved; and the strength of the film is increased.

The types of the inorganic binders or the resin binders to be contained in the dispersion for forming a solar radiation-shielding body are not limited. As the inorganic binder, silicon, zirconium, titanium, metal alkoxide of aluminum, or partially hydrolytic condensation polymer thereof, or organosilazane can be used. As the resin binder, thermoplastic resins, such as an acrylic resin, thermosetting resins, such as an epoxy resin, and the like can be used.

Further, it is preferred to form a multilayer film by applying, to the film, a coating liquid containing alkoxide containing at least one member of silicon, zirconium, titanium, aluminum and/or a partially hydrolytic condensation polymer of the alkoxide, and then heating the resultant to thereby form a coating film of an oxide containing at least one member of silicon, zirconium, titanium, and aluminum. This is because, by employing such a film structure, the coated portion is film-formed while filling deposited gaps of the antimony-containing tin oxide fine particles as a first layer to thereby suppress the refraction of visible light, whereby the haze value of the film further decreases and the visible light transmittance increases and, moreover, the binding property of the antimony-containing tin oxide fine particles to the substrate is improved. In this case, as a method of forming a coating film containing alkoxide containing one or more kinds of members of silicon, zirconium, titanium, aluminum and a partially hydrolytic condensation polymer thereof on a film containing, as a main component, a simple substance of antimony-containing tin oxide fine particles or antimony-containing tin oxide fine particles, the application method is suitable in view of ease of the film formation and the cost.

Mentioned as the coating liquid for use in the application method is a substance containing alkoxide containing one or more kinds of the members of silicon, zirconium, titanium, and aluminum or one or more kinds of partially hydrolytic condensation polymers thereof in a solvent, such as water or alcohol. It is preferred that the content be 40 wt% or lower in terms of oxide contained in a coating obtained after heating. It is also preferred to, as required, add acid or alkali for pH adjustment. By applying the coating liquid, as a second layer, to a film containing the antimony-containing tin oxide fine particles as a main component, and then heating, an oxide coating, such as silicon, zirconium, titanium, aluminum, etc., can readily formed. It is also preferred to use an organosilazane solution as a binder component or a coating liquid component for use in the coating liquid of the present invention.

There is no limitation on methods of applying the dispersion for forming a solar radiation-shielding body of the present invention and the coating liquid. For example, preferably applicable are methods of uniformly and thinly applying a treatment liquid, such as a spin coating method, a bar coating method, a spray coating method, a dip coating method, a screen printing method, a roll coating method, and flow coating.

Moreover, when the solar radiation shielding antimony tin oxide fine particles or the dispersion for forming a solar radiation-shielding body mentioned above to a resin as a base material, a known method may be suitably selected insofar as the antimony-containing tin oxide fine particles are uniformly dispersed in the resin. The resultant can be melt and mixed at a temperature near the melting point of the resin, pelletized, and then formed into various shapes, such as a plate shape, a sheet shape, or a film shape by a known method. Mentioned as the resin are, for example, PET resin, acrylic resin, polyamide resin, vinyl chloride resin, polycarbonate resin, olefine resin, epoxy resin, polyimide resin, fluororesin, etc.

A substrate heating temperature after the application of the dispersion for forming a solar radiation-shielding body containing silicon, zirconium, titanium, or metal alkoxide of aluminum and a partially hydrolytic condensation polymer thereof as the inorganic binder or the coating film is preferably 100°C or higher. It is more preferred that heating be performed at a temperature equal to or higher than the boiling point of the solvent in the coating liquid. This is because the polymerization reaction of the metal alkoxide or the hydrolyzed polymer of the metal alkoxide contained in the coating film can be completed when the substrate heating temperature is 100°C or higher. This is also because, when the substrate heating temperature is 100°C or higher, water or an organic solvent as a solvent does not remain in the film, and thus, in the film after heating, these solvents do not cause reduction in the visible light transmittance.

When a resin binder is added to the dispersion for forming a solar radiation-shielding body, the resin may be cured in accordance with a curing method of each resin. For example, when the resin binder is an ultraviolet curing resin, the resin may be suitably irradiated with ultraviolet rays. Or, when the resin is a roomtemperature-curing resin, the resin may be allowed to stand after applied. Employment of such construction allows on-the-spot application of the dispersion for forming a solar radiation-shielding body to an existing window glass, etc.

4. Solar radiation shielding body

As described above, the solar radiation-shielding body formed using the dispersion for forming a solar radiation-shielding body of the present invention has solar radiation shielding properties such that a solar radiation transmittance of a light having a wavelength of 300 to 2,100 nm is less than 65% and a haze value is less than 1% when the visible light transmittance is not less than 60% and less than 80%.

In the solar radiation-shielding body of the present invention, the antimony-containing tin oxide fine particles are dispersed in the film. Therefore, the reflection in a visible light region is suppressed as compared with a film having a mirror-like surface in which the film inside is densely filled with crystals similarly as in an oxide film formed by a physical film formation method, and thus the film can be avoided from developing a glaring appearance. Here, in order to further suppress the reflection in a visible light region, a film having a low refractive index, such as $SiO_2$ or $MgF_2$, is formed on a film in which the antimony-containing tin oxide fine particles are dispersed of the present invention, thereby easily obtaining a multilayer film having a luminous reflectance of 1% or lower.

In order to further give an ultraviolet shielding function to the solar radiation-shielding body of the present invention, it is preferred to add, to the dispersion, one or two or more kinds of the fine particles of inorganic titanium oxide, zinc oxide, cerium oxide, etc., organic benzophenone, benzotriazole, etc.

As described above in detail, since the dispersion for forming a solar radiation-shielding body of the present invention is not a dispersion which provides the target solar radiation-shielding body through the decomposition or the chemical reaction of a coating component by the heat in calcination, a solar radiation-shielding body having a uniform film thickness and stable properties can be formed. Moreover, since the antimony tin oxide fine particles demonstrating a solar radiation shielding effect are inorganic materials, the antimony tin oxide fine particles have extremely high weather resistance as compared with an organic material. Thus, the antimony tin oxide fine particles hardly show the deterioration in the color or various functions even if the particles are used for a portion which is irradiated with solar radiation (ultraviolet rays).

EXAMPLES

Hereinafter, the present invention will be described more specifically with reference to Examples, but is not limited thereto. It should be noted that, in each of the following Examples and Comparative Examples, the colors of powders (Standard illuminant: D65; visual field: 10°) of the antimony tin oxide fine particles a to c and the optical properties of solar radiation-shielding bodies A to E obtained using a dispersion in which one of the fine particles a to c has been dispersed were measured using the spectrophotometer U-4000 manufactured by Hitachi, Ltd.

The tap density of each of the antimony tin oxide fine particles a to c was measured using the powder circuit tester PT-E type manufactured by Hosokawa Micron (Number of times of tap: 200 times). The specific surface area of each of the antimony tin oxide fine particles a to c was measured by a nitrogen adsorption method using an apparatus manufactured by Calroelba. The haze value of the solar radiation-shielding body was measured using HR-200 manufactured by Murakami Color Research Laboratory, Inc. The measurement results are shown in FIG. 1 as a table.

[Example 1]

55.74 g of $SnCl_4 \cdot 5H_2O$ was dissolved in 340 g of 25°C water to form a solution. To the solution, 12.7 ml of methanol solution in which 4.2 g of $SbCl_3$ was dissolved and a 16%$NH_4OH$ aqueous solution were parallel-dropped. The parallel-dropping was performed over about 25 minutes until the pH of the solution reached 7.5. Then, a precipitate was formed by the parallel-dropping.

After the dropping was complete, stirring was further continued for 10 minutes.

Next, the precipitate was repeatedly washed by decantation. The decantation was repeatedly performed until the conductivity of the supernatant of a washing liquid reached 1 mS/cm or lower. After the completion of the decantation, the precipitate was filtered.

Next, the filtered precipitate was subjected to wet treatment with an anhydrous ethyl alcohol solution. The wet treatment was performed by adjusting a weight ratio of the filtered precipitate:anhydrous ethyl alcohol solution to 1:4 (in which the ratio of alcohol was equivalent to 80%) and stirring the filtered precipitate and the anhydrous ethyl alcohol solution at room temperature for 1 hour, to thereby obtain a precursor.

After the completion of the wet treatment, the precursor was dried at 90°C for 10 hours, to thereby obtain a dried material. The obtained dried material was calcined at 700°C under atmospheric air for 1 hour, to thereby obtain antimony tin oxide fine particles a.

The tap density of the fine particles a of the antimony tin oxide was 1.39 g/cm³; the color of powders L* was 55.0874, the color of powders a* was -3.8119, and the color of powders b* was -8.0813; and the specific surface area was 67.1 m²/g.

Next, a slurry obtained by mixing 25 wt% of the fine particles a, 7.5 wt% of a dispersant, and 67.5 wt% of toluene was put in a medium stirring mill together with $ZrO_2$ beads (diameter: 0.3 mm). Then, the slurry was pulverized and dispersed by continuous circulation (2 hours), thereby preparing a dispersion containing the fine particles a. The dispersion particle diameter of the antimony tin oxide fine particles in the dispersion after the pulverization and dispersion treatment became 110 nm, and the dispersion was stable.

Next, 75.0 wt% of a dispersion containing the obtained fine particles a and 25.0 wt% of a UV curing resin were thoroughly mixed, thereby preparing a dispersion a for forming a solar radiation-shielding body.

Hereinafter, the dispersion for forming a solar radiation-shielding body was applied to a PET (polyethylene terephthalate) film having a film thicknesses of 50 μm using No. 24 count lever. Thereafter, the resultant was irradiated with ultraviolet rays of a high pressure mercury lamp at 70°C for 1 minute, to thereby obtain a solar radiation-shielding body A of Example 1.

The optical properties of the solar radiation-shielding body A were measured, which showed that the visible light transmittance was 70.0%; the solar radiation transmittance was 51.3%; and the haze was 0.7% as shown in FIG. 1.

[Example 2]

Antimony tin oxide fine particles b were manufactured following the procedure of Example 1 except that the temperature of the solution in which $SnCl_4 \cdot 5H_2O$ was dissolved was adjusted to 40°C and calcination was performed at a calcination temperature 800°C for 2 hours under atmospheric air, and then a solar radiation-shielding body B was manufactured.

The tap density of the fine particles b was 1.30 g/cm$^3$; the color of powders L* was 52.1662, the color of powders a* was -3.2547, and the color of powders b* was - 4.4748; the specific surface area was 34.3 m$^2$/g; and the dispersion particle diameter of the antimony tin oxide fine particles in the dispersion was 108.6 nm.

The optical properties of the solar radiation-shielding body B were measured, which showed that the visible light transmittance was 74.0%; the solar radiation transmittance was 55.7%; and the haze was 0.8% as shown in FIG. 1.

[Example 3]

Antimony tin oxide fine particles c were manufactured following the procedure of Example 1 except that the filtered precipitate was subjected to wet treatment with an anhydrous ethyl alcohol solution while adjusting a weight ratio of the filtered precipitate:anhydrous ethyl alcohol solution to 1:1 (the ratio of alcohol was equivalent to 50%), and then and a solar radiation-shielding body C was manufactured.

The tap density of the fine particles c was 1.64 g/cm$^3$; the color of powders L* was 45.5509, the color of powders a* was -2.4358, and the color of powders b* was - 5.9250; the specific surface area was 65.3 m$^2$/g; and the dispersion particle diameter of the antimony tin oxide fine particles in the dispersion was 119.1 nm.

The optical properties of the solar radiation-shielding body C were measured, which showed that the visible light transmittance was 70.8%; the solar radiation transmittance was 51.6%; and the haze was 0.9% as shown in FIG. 1.

[Example 4]

The dispersion for forming a solar radiation-shielding body of Example 1 was added to a polycarbonate resin in such a manner that the concentration of an antimony tin oxide became 0.07 wt%, and thereafter the resultant was uniformly melt and mixed using a blender and a biaxial extruder. The molten mixture was subjected to extrusion molding using a T-die in such a manner as to have thickness of 2 mm, to thereby obtain a solar radiation-shielding body D in which the antimony tin oxide fine particles were uniformly dispersed throughout the resin (heat ray shielding polycarbonate sheet).

The optical properties of the solar radiation-shielding body D were measured, which showed that the visible light transmittance was 72.0%; the solar radiation transmittance was 52.7%; and the haze was 0.5% as shown in FIG. 1.

[Example 5]

A solar radiation-shielding body E (heat ray shielding polyethylene terephthalate sheet) in which the antimony tin oxide fine particles were uniformly dispersed throughout the resin was obtained by performing extrusion molding in such a manner that the thickness was 2 mm following the procedure of Example 4 except using polyethylene terephthalate resin in place of polycarbonate resin. The solar radiation-shielding body E and a green glass substrate were joined to each other with a 0.76 mm thick polyvinyl butyral sheet interposed therebetween, thereby producing a laminated structure R.

The optical properties of the laminated structure R were measured, which showed that the visible light transmittance was 72.5%; the solar radiation transmittance was 52.0%; and the haze was 0.4% as illustrated in FIG. 1.

[Comparative Example 1]

A dispersion for forming a solar radiation-shielding body and a solar radiation-shielding body F were manufactured following the procedure of Example 1 except that the pulverization and dispersion treatment time by continuous circulation of slurry was 0.7 hour. At this time, the dispersion particle diameter of the antimony tin oxide fine particles in the dispersion for forming a solar radiation-shielding body was 150.0 nm.

The optical properties of the solar radiation-shielding body F were measured, which showed that the visible light transmittance was 76.80%; the solar radiation transmittance was 58.9%; and the haze was 2.7% as shown in FIG. 1.

[Comparative Example 2]

Antimony tin oxide fine particles d were obtained following the procedure of Example 1 except that the cleaned precipitate was not subjected to wet treatment with ethyl alcohol. The tap density of the fine particles d was 1.96 g/cm$^3$; the color of powders L* was 41.1238, the color of powders a* was -1.1615, and the color of powders b* was -3.9406; and the specific surface area was 66.3 m$^2$/g.

Next, the pulverization and dispersion treatment by continuous circulation of slurry was performed for 3.5 hours. However, the antimony tin oxide fine particles d were easily precipitated, and the preparation of a dispersion was difficult. As a result, a solar radiation-shielding body was not manufactured.

[Comparative Example 3]

A solar radiation-shielding body G was obtained following the procedure of Example 1 except that a dispersion for forming a solar radiation-shielding body was manufactured without adding antimony tin oxide fine particles.

The optical properties of the solar radiation-shielding body G were measured, which showed that the visible light transmittance was 88.3%; the solar radiation transmittance was 88.3%; and the haze was 0.4% as shown in FIG. 1.

[Comparative Example 4]

Antimony tin oxide fine particles e were obtained following the procedure of Example 1 except that decantation was performed until the conductivity of the supernatant liquid of the washing liquid reached 45.0 mS/cm and the calcination temperature was adjusted to 400°C, and further, a solar radiation-shielding body H was obtained following the procedure of Example 1.

The tap density of the fine particles e was 1.30 g/cm$^3$; the color of powders L* was 57.1253, the color of powders a* was -2.6472, and the color of powders b* was - 2.5241; the specific surface area was 118.9 m$^2$/g; and the dispersion particle diameter of the antimony tin oxide fine particles in the dispersion was 107.5 nm.

The optical properties of the solar radiation-shielding body H were measured, which showed that the visible light transmittance was 75.5%; the solar radiation transmittance was 68.0%; and the haze was 0.7% as shown in FIG. 1.

[Comparative Example 5]

Antimony tin oxide fine particles f and a solar radiation shielding I were manufactured following the procedure of Example 1 except that decantation was performed until the conductivity of the supernatant liquid of the washing liquid reached 48.1 mS/cm.

The tap density of the fine particles f was 1.30 g/cm$^3$; the color of powders L* was 50.1527, the color of powders a* was -3.1606, and the color of powders b* was - 4.0117; the specific surface area was 38.5 m$^2$/g; and the dispersion particle diameter of the antimony tin oxide fine particles in the dispersion was 111.3 nm.

The optical properties of the solar radiation-shielding body I were measured, which showed that the visible light transmittance was 74.0%; the solar radiation transmittance was 57.2%; and the haze was 1.1% as shown in FIG. 1.

[Comparative Example 6]

Antimony tin oxide fine particles g and a solar radiation-shielding body J were manufactured following the procedure of Example 1 except that the calcination temperature under atmospheric air was adjusted to 1,050°C.

The tap density of the fine particles g was 1.64 g/cm$^3$; the color of powders L* was 58.9986, the color of powders a* was -2.8520, and the color of powders b* was - 6.0153; the specific surface area was 2.3 m$^2$/g;

and the dispersion particle diameter of the antimony tin oxide fine particles in the dispersion was 122.5 nm.

The optical properties of the solar radiation-shielding body J were measured, which showed that the visible light transmittance was 74.0%; the solar radiation transmittance was 66.2%; and the haze was 2.3% as shown in FIG. 1.

[Example 6]

Antimony tin oxide fine particles h and a solar radiation-shielding body K were manufactured following the procedure of Example 1 except that a solution in which 11.62 g of $SnCl_4·5H_2O$ was dissolved in 297 g of water and 30 ml of a methanol solution in which 1.04 g of $SbCl_3$ was dissolved were parallel-dropped to 30 ml of a 25°C 8.7%$NH_4OH$ aqueous solution over about 6 minutes.

The tap density of the fine particles h was 1.29 g/cm$^3$; the color of powders L* was 52.1479, the color of powders a* was -3.3895, and the color of powders b* was - 5.0440; the specific surface area was 44.9 m$^2$/g; and the dispersion particle diameter of the antimony tin oxide fine particles in the dispersion was 103.2 nm.

The optical properties of the solar radiation-shielding body K were measured, which showed that the visible light transmittance was 70.0%; the solar radiation transmittance was 47.6%; and the haze was 0.7% as shown in FIG. 1.

[Evaluation]

FIG. 1 is a list showing the measurement results of the tap density, the color of powders, the specific surface area, and the dispersion particle diameter of the antimony tin oxide fine particles a to h mentioned above and the optical properties of the solar radiation-shielding bodies A to K which were film-formed using the antimony tin oxide fine particles a to h.

As illustrated in FIG. 1, the solar radiation-shielding bodies A to E and K (Examples 1 to 6) which were film-formed using the antimony tin oxide fine particles a to c, and h in which the tap density was 1.85 g/cm$^3$ or lower; the color of powders L* was 40 to 65, the color of powders a* was -5 to -1, and the color of powders b* was - 11 to -1; and the specific surface area was in the range of 5 to 110 m$^2$/g had a solar radiation transmittance of light having a wavelength in the range of 300 to 2100 nm was less than 65% and a haze value was less than 1% when the visible light transmittance was not less than 60% and less than 80%.

In contrast, the tap density of each of the antimony tin oxide fine particles d to g (Comparative Examples) was 1.85 g/cm$^3$ or lower except for the antimony tin oxide fine particles d; all of the antimony tin oxide fine particles d to g had the color of powders L* in the range of 40 to 65, the color of powders a* in the range of -5 to -1, and the color of powders b* in the range of -11 to -1;

and the specific surface area in the range of 5 to 110 m²/g except for the antimony tin oxide fine particles e and g. However, the solar radiation-shielding body F (Comparative Example 1) which was film-formed using the antimony tin oxide fine particles a obtained by shortening the pulverization and dispersion treatment time by continuous circulation of slurry has a dispersion particle diameter exceeding 130 nm. Thus, the solar radiation transmittance was less than 65%, but the haze value exceeded 1%.

In contrast, in the case of using the antimony tin oxide fine particles d which were obtained while not shortening the pulverization and dispersion treatment time by continuous circulation of slurry and while not performing wet treatment with an alcohol solution, the tap density of the antimony tin oxide fine particles d exceeded 1.85. Thus, the production of a dispersion was difficult and a solar radiation-shielding body was not manufactured (Comparative Example 2).

Further, when the antimony tin oxide fine particles were not added (Comparative Example 3), the haze value was less than 1%, but the solar radiation transmittance exceeded 65%.

The antimony tin oxide fine particles e obtained by terminating decantation when the conductivity of the supernatant liquid of the washing liquid reached 45.0 mS/cm and adjusting the calcination temperature to 400°C had a specific surface area exceeding 110 m²/g. Therefore, with respect to the solar radiation-shielding body H (Comparative Example 4) which was film-formed using the antimony tin oxide fine particles e, the haze value was less than 1%, but the solar radiation transmittance exceeded 65%.

With respect to the solar radiation shielding I (Comparative Example 5) which was film-formed using the antimony tin oxide fine particles f obtained by returning the calcination temperature to 700°C and terminating decantation when the conductivity of the supernatant liquid of the washing liquid reached 48.10 mS/cm, the solar radiation transmittance was less than 65% and the haze value exceeded 1%.

With respect to the antimony tin oxide fine particles g which were manufactured by adjusting the calcination temperature under atmospheric air to 1,050°C, the specific surface area became 5 m²/g or lower. With respect to the solar radiation-shielding body J (Comparative Example 6) which was film-formed using the antimony tin oxide fine particles g, the solar radiation transmittance exceeded 65% and the haze value also exceeded 1%.

**Claims**

1. A manufacturing method for antimony-containing tin oxide fine particles for solar radiation-shielding, the antimony-containing tin oxide fine particles having: a tap density of 1.85 g/cm³ or lower; a color of powders L* of 40 to 65, a color of powders a* of -5 to -1, and a color of powders b* of -11 to -1 in an L*a*b* color system; and a specific surface area in a range of 5 to 110 m²/g, comprising:

parallel-dropping an alcohol solution in which an antimony compound is dissolved and an alkali solution to a tin compound solution having a temperature of 50 deg.C or lower to generate a hydroxide containing tin and antimony, to thereby obtain a precipitate;
subjecting the precipitate to decantation until a conductivity of a washing liquid reaches 1 mS/cm or lower, to thereby obtain a filtered washed material;
subjecting the washed material to wet treatment performed by putting and stirring the washed material in an alcohol solution and drying thereafter, to thereby obtain a precursor of antimony-containing tin oxide fine particles; and
calcinating the precursor, to thereby obtain the antimony-containing tin oxide fine particles for solar radiation-shielding.

2. A manufacturing method for antimony-containing tin oxide fine particles for solar radiation-shielding, the antimony-containing tin oxide fine particles having: a tap density of 1.85 g/cm³ or lower; a color of powders L* of 40 to 65, a color of powders a* of -5 to -1, and a color of powders b* of -11 to -1 in an L*a*b* color system; and a specific surface area in a range of 5 to 110 m²/g, comprising:

parallel-dropping a tin compound solution and an alcohol solution in which an antimony compound is dissolved to and an alkali solution having a temperature of 50 deg.C or lower to generate a hydroxide containing tin and antimony, to thereby obtain a precipitate;
subjecting the precipitate to decantation until a conductivity of a washing liquid reaches 1 mS/cm or lower, to thereby obtain a filtered washed material;
subjecting the washed material to wet treatment performed by putting and stirring the washed material in an alcohol solution and drying thereafter, to thereby obtain a precursor of antimony-containing tin oxide fine particles; and
calcinating the precursor, to thereby obtain the antimony-containing tin oxide fine particles for solar radiation-shielding.

3. The manufacturing method for antimony-containing tin oxide fine particles for solar radiation-shielding according to claim 1 or 2, further comprising:

immersing the precursor of antimony-containing tin oxide fine particles in an alcohol solution containing one or more elements selected from Si, Al, Zr, and Ti in a ratio of less than 15 wt% in terms of oxide and drying thereafter, to thereby obtain a precursor of antimony-containing tin oxide fine particles containing the one or more elements selected from Si, Al, Zr, and Ti.

4. The manufacturing method for antimony-containing tin oxide fine particles for solar radiation-shielding according to any one of claims 1 to 3, wherein the alcohol solution used contains the alcohol in a ratio of 50 wt% or more.

5. The manufacturing method for antimony-containing tin oxide fine particles for solar radiation-shielding according to any one of claims 1 to 3, wherein the precursor of antimony-containing tin oxide fine particles is calcined at a temperature of 500 deg.C or higher and lower than 1,100 deg.C.

6. The manufacturing method for antimony-containing tin oxide fine particles for solar radiation-shielding according to claim 1, wherein the parallel-dropping of the alcohol solution in which an antimony compound is dissolved and the alkali solution is performed for 0.5 minutes or more and 30 or less minutes.

7. The manufacturing method for antimony-containing tin oxide fine particles for solar radiation-shielding according to claim 2, wherein the parallel-dropping of the tin compound solution and the alcohol solution in which of an antimony compound is dissolved is performed for 0.5 minutes or more and 30 or less minutes.

8. The manufacturing method for antimony-containing tin oxide fine particles for solar radiation-shielding according to any one of claims 1 to 7, wherein surfaces of the antimony-containing tin oxide fine particles for solar radiation-shielding are coated with a compound containing at least one element selected from Si, Ti, Al, Zr, and Y.

9. A dispersion for forming a solar radiation-shielding body, comprising antimony-containing tin oxide fine particles for solar radiation-shielding manufactured by the manufacturing method according to any one of claims 1 to 8 and a solvent being mixed together, wherein each of the antimony-containing tin oxide fine particles for solar radiation-shielding in the solvent, which is obtained by pulverizing and dispersing the mixture using a medium stirring mill, has a diameter of 130 nm or smaller.

10. The dispersion for forming a solar radiation-shielding body according to claim 9, further comprising one or more binders selected from inorganic binders and resin binders.

11. A solar radiation-shielding body, comprising the antimony-containing tin oxide fine particles for solar radiation-shielding manufactured by the manufacturing method according to any one of claims 1 to 8.

12. A solar radiation-shielding body, which is formed using the dispersion for forming a solar radiation-shielding body according to claim 9 or 10.

13. The solar radiation-shielding body, comprising the solar radiation-shielding body according to claim 11 or 12 formed on one of a glass and a plastic.

14. A solar radiation-shielding body, comprising one of the antimony-containing tin oxide fine particles for solar radiation-shielding manufactured by the manufacturing method according to any one of claims 1 to 8 and the dispersion for forming a solar radiation-shielding body according to claim 9 or 10, each of which being kneaded into a resin used as a base material, the resin being molded into one of a plate-like shape, a sheet-like shape, and a film-like shape to form the solar radiation-shielding body.

15. The solar radiation-shielding body according to any one of claims 11 to 14, wherein the solar radiation-shielding body has a transmittance of light having a wavelength of 300 to 2,100 nm of less than 65% and a haze value of the solar radiation-shielding body of less than 1%, when a visible light transmittance of the solar radiation-shielding body is 60% or more and 80% or less.

16. A base material for solar radiation-shielding, comprising the solar radiation-shielding body according to any one of claims 11 to 15, which is formed on a transparent substrate.

**Patentansprüche**

1. Herstellungs verfahren für Antimon-enthaltende Zinnoxid-Feinpartikel zu r Sonnenstrahlen-Abschirmung, wobei die Antimon-enthaltenden Zinnoxid-Feinpartikel aufweisen: eine Klopfdichte von 1,85 g/cm$^3$ oder weniger; eine Pulverfarbe L* von 40 bis 65, eine Pulverfarbe a* von -5 bis -1 und eine Pulverfarbe b* von -11 bis -1 in einem L*a*b*-Farbsystem; und eine spezifische Oberfläche im Bereich von 5 bis 110 m$^2$/g, umfassend:

paralleles Tropfen einer Alkohollösung, worin eine Antimonverbindung gelöst ist, u n d einer Alkalilösung zu einer Zinnverbindungs-Lösung, die eine Temperatur von 50 °C oder weniger aufweist, um ein Hydroxid, das Zinn und Antimon enthält, zu erzeugen, um so ein Präzipitat zu erhalten;

Unterwerfen des Präzipitats an eine Dekantierung, bis die Leitfähigkeit der Waschflüssigkeit 1 mS/cm oder weniger erreicht, um so ein filtriertes gewaschenes Material zu erhalten;

Unterwerfen des gewaschenen Materials an eine Nassbehandlung, durchgeführt durch Anordnen des gewaschenen Materials in einer Alkohollösung, Rühren und anschließendes Trocknen, um so einen Vorläufer von Antimon-enthaltenden Zinnoxid-Feinpartikeln zu erhalten; und Kalzinieren des Vorläufers, um so die Antimon-enthaltenden Zinnoxid-Feinpartikel zur Sonnenstrahlen-Abschirmung zu erhalten.

2. Herstellungsverfahren für Antimon-enthaltende Zinnoxid-Feinpartikel zur Sonnenstrahlen-Abschirmung,

wobei die Antimon-enthaltenden Zinnoxid-Feinpartikel aufweisen: eine Klopfdichte von 1,85 $g/cm^3$ oder weniger; eine Pulverfarbe L* von 40 bis 65, eine Pulverfarbe a* von -5 bis -1 und eine Pulverfarbe b* von -11 bis -1 in einem L*a*b*-Farbsystem; und eine spezifische Oberfläche im Bereich von 5 bis 110 $m^2/g$, umfassend:

paralleles Tropfen einer Zinnverbindungs-Lösung und einer Alkohollösung, worin eine Antimonverbindung gelöst ist, zu einer Alkalilösung, die eine Temperatur von 50 °C oder weniger aufweist, um ein Hydroxid, das Zinn und Antimon enthält, zu erzeugen, um so ein Präzipitat zu erhalten;

Unterwerfen des Präzipitats an eine Dekantierung, bis die Leitfähigkeit der Waschflüssigkeit 1 mS/cm oder weniger erreicht, um so ein filtriertes gewaschenes Material zu erhalten;

Unterwerfen des gewaschenen Materials an eine Nassbehandlung, durchgeführt durch Anordnen des gewaschenen Materials in einer Alkohollösung, Rühren und anschließendes Trocknen, um so einen Vorläufer von Antimon-enthaltenden Zinnoxid-Feinpartikeln zu erhalten; und Kalzinieren des Vorläufers, um so die Antimon-enthaltenden Zinnoxid-Feinpartikel zur Sonnenstrahlen-Abschirmung zu erhalten.

3. Herstellungsverfahren für Antimon-enthaltende Zinnoxid-Feinpartikel zur Sonnenstrahlen-Abschirmung gemäß Anspruch 1 oder 2, ferner umfassend:

Eintauchen des Vorläufers von Antimon-enthaltenden Zinnoxid-Feinpartikeln in eine Alkohollösung, die ein oder mehrere Elemente, ausgewählt aus Si, Al, Z r und Ti, in einem Anteil von weniger als 15 Gew.-% bezogen auf das Oxid enthält, und anschließend Trocknen, um so einen Vorläufer von Antimon-enthaltenden Zinnoxid-Feinpartikeln zu erhalten, die ein noder mehrere Elemente, ausgewählt aus Si, Al, Zr und Ti, enthalten.

4. Herstellungsverfahren für Antimon-enthaltende Zinnoxid-Feinpartikel zur Sonnenstrahlen-Abschirmung gemäß einem der Ansprüche 1 bis 3, wobei die verwendete Alkohollösung den Alkohol in einem Anteil von 50 Gew.-% oder mehr enthält.

5. Herstellungsverfahren für Antimon-enthaltende Zinnoxid-Feinpartikel zur Sonnenstrahlen-Abschirmung gemäß einem der Ansprüche 1 bis 3, wobei de r Vorläufer vo n Antimon-enthaltenden Zinnoxid-Feinpartikeln bei einer Temperatur von 500 °C oder höher und tiefer als 1.100 °C kalziniert wird.

6. Herstellungsverfahren für Antimon-enthaltende Zinnoxid-Feinpartikel zur Sonnenstrahlen-Abschirmung gemäß Anspruch 1, wobei das parallele Tropfen der Alkohollösung, worin eine Antimonverbindung gelöst ist, und der Alkalilösung über 0,5 Minuten oder mehr und 30 Minuten oder weniger durchgeführt wird.

7. Herstellungsverfahren für Antimon-enthaltende Zinnoxid-Feinpartikel zur Sonnenstrahlen-Abschirmung gemäß Anspruch 2, wobei das parallele Tropfen de r Zinnverbindungs-Lösung un d der Alkohollösung, worin eine Antimonverbindung gelöst ist, über 0,5 Minuten oder mehr und 30 Minuten oder weniger durchgeführt wird.

8. Herstellungsverfahren für Antimon-enthaltende Zinnoxid-Feinpartikel zur Sonnenstrahlen-Abschirmung gemäß einem der Ansprüche 1 bis 7, wobei die Oberflächen der Antimon-enthaltenden Zinnoxid-Feinpartikel zur Sonnenstrahlen-Abschirmung mit einer Verbindung beschichtet werden, die wenigstens ein Element, ausgewählt aus Si, Ti, Al, Zr und Y, enthält.

9. Dispersion zur Herstellung eines Sonnenstrahlen-Abschirmungskörpers, umfassend Antimon-enthaltende Zinnoxid-Feinpartikel zur Sonnenstrahlen-Abschirmung, hergestellt durch das Herstellungsverfahren gemäß einem der Ansprüche 1 bis 8, und ein Lösungsmittel, die zusammengemischt sind, wobei jedes der Antimon-enthaltenden Zinnoxid-Feinpartikel zur Sonnenstrahlen-Abschirmung in dem Lösungsmittel, das durch Pulverisieren und Dispergieren de s Gemischs mithilfe einer Medium-Rührmühle erhalten ist, einen Durchmesser von 130 n m oder weniger aufweist.

10. Dispersion zur Herstellung eines Sonnenstrahlen-Abschirmungskörpers gemäß Anspruch 9 , ferner umfassend ein oder mehrere Bindemittel, ausgewählt a u s anorganischen Bindemitteln und Harzbindemitteln.

11. Sonnenstrahlen-Abschirmungskörper, umfassend die Antimon-enthaltenden Zinnoxid-Feinpartikel zur Sonnenstrahlen-Abschirmung, hergestellt durch das Herstellungsverfahren gemäß einem der Ansprüche 1 bis 8.

12. Sonnenstrahlen-Abschirmungskörper, hergestellt unter Verwendung der Dispersion zur Herstellung eines Sonnenstrahlen-Abschirmungskörpers gemäß Anspruch 9 oder 10.

13. Sonnenstrahlen-Abschirmungskörper, umfassend den Sonnenstrahlen-Abschirmungs körper gemäß Anspruch 11 oder 12, gebildet auf einem von einem Glas und einem Kunststoff.

14. Sonnenstrahlen-Abschirmungskörper, umfassend eines der Antimon-enthaltenden Zinnoxid-Feinpartikel zur Sonnenstrahlen-Abschirmung, hergestellt durch das Herstellungsverfahren gemäß einem der Ansprüche 1 bis 8, und die Dispersion zur Herstellung eines Sonnenstrahlen-Abschirmungs körpers gemäß Anspruch 9 oder 10, wobei jede davon in ein als Grundmaterial verwendetes Harz geknetet ist, wobei das Harz in eine von einer plattenartigen Form, einer bahnartigen Form und einer filmartigen Form geformt ist, um den Sonnenstrahlen-Abschirmungskörper zu bilden.

15. Sonnenstrahlen-Abschirmungskörper gemäß einem der Ansprüche 11 bis 14, wobei der Sonnenstrahlen-Abschirmungskörper eine Transmittanz für Licht mit einer Wellenlänge von 300 bis 2.100 nm von weniger als 65 % aufweist und einen Trübungswert des Sonnenstrahlen-Abschirmungskörpers von weniger als 1 %, wenn die Transmittanz für sichtbares Licht des Sonnenstrahlen-Abschirmungskörpers 60 % oder mehr und 80 % oder weniger beträgt.

16. Grundmaterial zu r Sonnenstrahlen-Abschirmung, umfassend de n Sonnenstrahlen-Abschirmungskörper gemäß einem der Ansprüche 11 bis 15, der auf einem transparenten Substrat gebildet ist.

## Revendications

1. Procédé de fabrication de fines particules d'oxyde d'étain contenant de l'antimoine pour la protection contre le rayonnement solaire, les fines particules d'oxyde d'étain contenant de l'antimoine ayant : une densité après tassement de 1,85 $g/cm^3$ ou moins ; une couleur de poudre L* de 40 à 65, une couleur de poudre a* de -5 à -1 et une couleur de poudre b* de -11 à -1 dans le système de couleurs L*a*b* ; et une surface spécifique dans la gamme de 5 à 110 $m^2/g$, comprenant :

l'addition goutte à goutte en parallèle d'une solution alcoolique dans laquelle est dissous un composé d'antimoine et d'une solution alcaline à une solution de composé d'étain ayant une température de 50 °C ou moins afin de générer un hydroxyde contenant de l'étain et de l'antimoine, pour obtenir ainsi un précipité ; la soumission du précipité à une décantation jusqu'à ce que la conductivité du liquide de lavage atteigne 1 mS/cm au moins, pour obtenir ainsi un matériau lavé filtré ; la soumission du matériau lavé à un traitement humide effectué en plaçant le matériau lavé dans une solution alcoolique et en l'agitant puis son séchage, pour obtenir ainsi un précurseur de fines particules d'oxyde d'étain contenant de l'antimoine ; et la calcination du précurseur, pour obtenir ainsi les fines particules d'oxyde d'étain contenant de l'antimoine pour la protection contre le rayonnement solaire.

2. Procédé de fabrication de fines particules d'oxyde d'étain contenant de l'antimoine pour la protection contre le rayonnement solaire, les fines particules d'oxyde d'étain contenant de l'antimoine ayant : une densité après tassement de 1,85 $g/cm^3$ ou moins ; une couleur de poudre L* de 40 à 65, une couleur de poudre a* de -5 à -1 et une couleur de poudre b* de -11 à -1 dans le système de couleurs L*a*b* ; et une surface spécifique dans la gamme de 5 à 110 $m^2/g$, comprenant :

l'addition goutte à goutte en parallèle d'une solution de composé d'étain et d'une solution alcoolique dans laquelle est dissous un composé d'antimoine à une solution alcaline ayant une température de 50 °C ou moins afin de générer un hydroxyde contenant de l'étain et de l'antimoine, pour obtenir ainsi un précipité ; la soumission du précipité à une décantation jusqu'à ce que la conductivité du liquide de lavage atteigne 1 mS/cm au moins, pour obtenir ainsi un matériau lavé filtré ; la soumission du matériau lavé à un traitement humide effectué en plaçant le matériau lavé dans une solution alcoolique et en l'agitant puis son séchage, pour obtenir ainsi un précurseur de fines particules d'oxyde d'étain contenant de l'antimoine ; et la calcination du précurseur, pour obtenir ainsi les fines particules d'oxyde d'étain contenant de l'antimoine pour la protection contre le rayonnement solaire.

**3.** Procédé de fabrication de fines particules d'oxyde d'étain contenant de l'antimoine pour la protection contre le rayonnement solaire selon la revendication 1 ou 2, comprenant en outre :

l'immersion du précurseur de fines particules d'oxyde d'étain contenant de l'antimoine dans une solution alcoolique contenant un ou plusieurs éléments choisis parmi Si, Al, Zr et Ti dans une proportion inférieure à 15 % en poids, exprimée en oxyde, puis son séchage, pour obtenir ainsi un précurseur de fines particules d'oxyde d'étain contenant de l'antimoine contenant le ou les éléments choisis parmi Si, Al, Zr et Ti.

**4.** Procédé de fabrication de fines particules d'oxyde d'étain contenant de l'antimoine pour la protection contre le rayonnement solaire selon l'une quelconque des revendications 1 à 3, dans lequel la solution alcoolique utilisée contient l'alcool dans une proportion d'au moins 50 % en poids.

**5.** Procédé de fabrication de fines particules d'oxyde d'étain contenant de l'antimoine pour la protection contre le rayonnement solaire selon l'une quelconque des revendications 1 à 3, dans lequel le précurseur de fines particules d'oxyde d'étain contenant de l'antimoine est calciné à une température supérieure ou égale à 500 °C et inférieure à 1100 °C.

**6.** Procédé de fabrication de fines particules d'oxyde d'étain contenant de l'antimoine pour la protection contre le rayonnement solaire selon la revendication 1, dans lequel l'addition goutte à goutte en parallèle de la solution alcoolique dans laquelle est dissous un composé d'antimoine et de la solution alcaline est effectuée pendant 0,5 minute ou plus et 30 minutes ou moins.

**7.** Procédé de fabrication de fines particules d'oxyde d'étain contenant de l'antimoine pour la protection contre le rayonnement solaire selon la revendication 2, dans lequel l'addition goutte à goutte en parallèle de la solution de composé d'étain et de la solution alcoolique dans laquelle est dissous un composé d'antimoine est effectuée pendant 0,5 minute ou plus et 30 minutes ou moins.

**8.** Procédé de fabrication de fines particules d'oxyde d'étain contenant de l'antimoine pour la protection contre le rayonnement solaire selon l'une quelconque des revendications 1 à 7, dans lequel les surfaces des fines particules d'oxyde d'étain contenant de l'antimoine pour la protection contre le rayonnement solaire sont recouvertes d'un composé contenant au moins un élément choisi parmi Si, Ti, Al, Zr et Y.

**9.** Dispersion pour former un corps de protection contre le rayonnement solaire, comprenant les fines particules d'oxyde d'étain contenant de l'antimoine pour la protection contre le rayonnement solaire fabriquées par le procédé de fabrication selon l'une quelconque des revendications 1 à 8 et un solvant qui sont mélangés ensemble, dans laquelle chacune des fines particules d'oxyde d'étain contenant de l'antimoine pour la protection contre le rayonnement solaire dans le solvant, qui est obtenue en pulvérisant et en dispersant le mélange en utilisant un broyeur à milieu agité, a un diamètre de 130 nm ou moins.

**10.** Dispersion pour former un corps de protection contre le rayonnement solaire selon la revendication 9, comprenant en outre un ou plusieurs liants choisis parmi les liants inorganiques et les liants à base de résine.

**11.** Corps de protection contre le rayonnement solaire, comprenant les fines particules d'oxyde d'étain contenant de l'antimoine pour la protection contre le rayonnement solaire fabriquées par le procédé de fabrication selon l'une quelconque des revendications 1 à 8.

**12.** Corps de protection contre le rayonnement solaire, qui est formé en utilisant la dispersion pour former un corps de protection contre le rayonnement solaire selon la revendication 9 ou 10.

**13.** Corps de protection contre le rayonnement solaire, comprenant le corps de protection contre le rayonnement solaire selon la revendication 11 ou 12 formé sur un verre ou un plastique.

**14.** Corps de protection contre le rayonnement solaire, comprenant les fines particules d'oxyde d'étain contenant de l'antimoine pour la protection contre le rayonnement solaire fabriquées par le procédé de fabrication selon l'une quelconque des revendications 1 à 8 ou la dispersion pour former un corps de protection contre le rayonnement solaire selon la revendication 9 ou 10, chacune d'entre elles étant malaxée dans une résine utilisée comme matériau de base, la résine étant moulée en forme de plaque ou en forme de feuille ou en forme de film pour former le corps de protection contre le rayonnement solaire.

**15.** Corps de protection contre le rayonnement solaire selon l'une quelconque des revendications 11 à 14, le corps de protection contre le rayonnement solaire ayant un facteur de transmission de la lumière ayant une longueur d'onde de 300 à 2100 nm inférieur à 65 % et une valeur de trouble du corps de protection contre le rayonnement solaire inférieure à 1 %, quand le facteur de transmission de la lumière visible du corps de protection contre le rayonnement solaire est de 60 % ou plus et 80 % ou moins.

16. Matériau de base pour la protection contre le rayonnement solaire, comprenant le corps de protection contre le rayonnement solaire selon l'une quelconque des revendications 11 à 15, qui est formé sur un substrat transparent.

FIG. 1

| | Fine particles | Solution temperature | Parallel dropping time | Stirring time | Conductivity of supernatant liquid | Alcohol concentration in wet treatment | Calcination condition | Tap density (g/cm³) | powder color | | | Specific surface area | Pulverization·dispersion treatment | Dispersion particle diameter | Solar radiation-shielding body | Solar radiation transmittance | Haze |
|---|---|---|---|---|---|---|---|---|---|---|---|---|---|---|---|---|---|
| | | (°C) | (min) | (min) | (mS/cm) | (%) | (°C) | (g/cm³) | L* | a* | b* | (m²/g) | (hr) | (nm) | | (%) | (%) |
| Example 1 | a | 25 | 25 | 10 | 1 or less | 80 | 700× 1hr | 1.39 | 55.0874 | −3.8119 | −8.0813 | 67.1 | 2.0 | 110.0 | A | 51.3 | 0.7 |
| Example 2 | b | 40 | 25 | 10 | 1 or less | 80 | 800× 2hr | 1.30 | 52.1662 | −3.2547 | −4.4748 | 34.3 | 2.0 | 108.6 | B | 55.7 | 0.8 |
| Example 3 | c | 25 | 25 | 10 | 1 or less | 50 | 700× 1hr | 1.64 | 45.5509 | −2.4358 | −5.9250 | 65.3 | 2.0 | 119.1 | C | 51.6 | 0.9 |
| Example 4 | a | Same as in Example 1 | | | | | | | | | | | | | D* | 52.7 | 0.5 |
| Example 5 | a | | | | | | | | | | | | | | E* | 52.0 | 0.4 |
| Comparative Example 1 | a | | | | | | | | | | | | 0.7 | 150.0 | F | 58.9 | 2.7 |
| Comparative Example 2 | d | 25 | 25 | 10 | 1 or less | − | 700× 1hr | 1.96 | 41.1238 | −1.1615 | −3.9406 | 66.3 | 3.5 | − | − | − | − |
| Comparative Example 3 | − | − | − | − | − | − | − | − | − | − | − | − | − | − | G | 88.3 | 0.4 |
| Comparative Example 4 | e | 25 | 25 | 10 | 45.0 | 80 | 400× 1hr | 1.30 | 57.1253 | −2.6472 | −2.5241 | 118.9 | 2.0 | 107.5 | H | 68.0 | 0.7 |
| Comparative Example 5 | f | 25 | 25 | 10 | 48.1 | 80 | 700× 1hr | 1.30 | 50.1527 | −3.1606 | −4.0117 | 38.5 | 2.0 | 111.3 | I | 57.2 | 1.1 |
| Comparative Example 6 | g | 25 | 25 | 10 | 1 or less | 80 | 1050× 1hr | 1.64 | 58.9986 | −2.852 | −6.0153 | 2.3 | 2.0 | 122.5 | J | 66.2 | 2.3 |
| Example 6 | h | 25 | 6 | 10 | 1 or less | 80 | 700× 1hr | 1.29 | 52.1479 | −3.3895 | −5.0440 | 44.9 | 2.0 | 103.2 | K | 47.6 | 0.7 |

D*: Using a polycarbonate resin as a base material

E*: Using a polyethylene terephthalate resin as a base material

**EP 1 967 495 B1**

## REFERENCES CITED IN THE DESCRIPTION

### Patent documents cited in the description

- JP 7257922 A
- JP 2002194291 A
- JP 2003176132 A
- JP 2004075510 A
- JP 2004083397 A